# EUROPÄISCHE PATENTANMELDUNG

(11) **EP 4 768 218 A1**
(43) Veröffentlichungstag der Anmeldung: **01.07.2026**
(21) Anmeldenummer: 25220657.8
(22) Anmeldetag: 04.12.2025
(51) Int. Cl.: B29C 45/00, B29C 45/14, B29C 67/24

(54) **VERFAHREN ZUR HERSTELLUNG EINES AUSSENVERKLEIDUNGSTEILS**

(30) Priorität: 28.12.2024 DE 102024139847
(71) Anmelder: RESRG Automotive SE & Co. KG, 95111 Rehau (DE)
(72) Erfinder: Beyerlein, Patrick, 95111 Rehau (DE); Hähnel, Gerd, 95111 Rehau (DE); Reichstein, Johann, 95448 Bayreuth (DE)

(57) **Zusammenfassung**

Die vorliegende Erfindung betrifft ein Verfahren zur Herstellung eines Außenverkleidungsteils (20) für Fahrzeuge unter Verwendung eines Reaktionsspritzgussverfahrens in einem Reaktionsspritzgusswerkzeugs (1), umfassend die nachfolgenden Schritte; Bereitstellen eines zumindest abschnittsweise flächig ausgebildeten Trägersubstrats (2) aus einem ersten Kunststoffmaterial, wobei das Trägersubstrat (2) eine das Trägersubstrat (2) durchsetzende Öffnung (3) und eine erste Seite (a) und eine der ersten Seite (a) gegenüberliegende Rückseite (b) aufweist; Positionieren des Trägersubstrats (2) innerhalb einer durch zwei Werkzeugformhälften (A, B) gebildeten Kavität des Reaktionsspritzgusswerkzeugs (1), wobei im geschlossenen Zustand des Reaktionsspritzgusswerkzeugs (1) zwischen der ersten Seite (a) des Trägersubstrat (2) und einer der Werkzeugformhälften (A) des Reaktionsspritzgusswerkzeugs (1) eine Zusatzkavität (4) innerhalb der Kavität frei bleibt; Einbringen eines weiteren Kunststoffmaterials in die Zusatzkavität (4), wobei das weitere Kunststoffmaterial nach seiner Erstarrung oder Verfestigung eine Deckschicht (5) auf oder über der ersten Seite (a) des Trägersubstrat (2) ausbildet. Beim Einbringen des weiteren Kunststoffmaterials in die Zusatzkavität (4), werden neben der Herstellung der Deckschicht (5), zusätzlich die Flanke (10) mit dem weiteren Kunststoffmaterial versiegelt, wobei mittels einer Dichtkante (7, 8) oder mittels mehrerer Dichtkanten (7, 8) ein ungewolltes Überspritzen der Rückseite (b) des Trägersubstrats (2) verhindert wird.

## Beschreibung

Die vorliegende Erfindung betrifft ein Verfahren zur Herstellung eines Außenverkleidungsteils für Fahrzeuge unter Verwendung eines Reaktionsspritzgussverfahrens in einem Reaktionsspritzgusswerkzeugs, umfassend die nachfolgenden Schritte:
- Bereitstellen eines zumindest abschnittsweise flächig ausgebildeten Trägersubstrats aus einem ersten Kunststoffmaterial, wobei das Trägersubstrat eine das Trägersubstrat durchsetzende Öffnung und eine erste Seite und eine der ersten Seite gegenüberliegende Rückseite aufweist,
- Positionieren des Trägersubstrats innerhalb einer durch zwei Werkzeugformhälften gebildeten Kavität des Reaktionsspritzgusswerkzeugs, wobei im geschlossenen Zustand des Reaktionsspritzgusswerkzeugs zwischen der ersten Seite des Trägersubstrat und einer der Werkzeugformhälften des Reaktionsspritzgusswerkzeugs eine Zusatzkavität innerhalb der Kavität frei bleibt,
- Einbringen eines weiteren Kunststoffmaterials in die Zusatzkavität, wobei das weitere Kunststoffmaterial nach seiner Erstarrung oder Verfestigung eine Deckschicht auf oder über der ersten Seite des Trägersubstrat ausbildet,
- Öffnen des Reaktionsspritzgusswerkzeugs und Entformen des gebildeten, das Trägersubstrat und die Deckschicht umfassenden, Außenverkleidungsteils.

Bei Reaktionsspritzgussverfahren wie dem sogenannten Reaction Injection Moulding (RIM) oder Reinforced Reaction Injection Moulding (RRIM) handelt es sich ein Urformverfahren zur Herstellung von Kunststoffformteilen wie Außenverkleidungsteilen oder Zierteilen für Fahrzeuge. Dabei werden mindestens zwei Komponenten (und eventuell weitere Zusätze) in einem Mischer intensiv gemischt und unmittelbar anschließend als Reaktionsmasse (vorliegend als das weitere Kunststoffmaterial) in eine formgebende Zusatzkavität gespritzt oder geflutet. Die Aushärtung findet in der Zusatzkavität statt. Kennzeichnend für dieses Verfahren ist unter anderem ein geringer Zuhaltedruck der Werkzeugformhälften. Die Reaktionsmassen aus dem RIM-Prozess weisen gegenüber thermoplastischen Schmelzen aufgrund ihrer niedrigen Viskosität ein günstigeres Fließverhalten auf. Somit lassen sich bei gleicher Wanddicke größere Fließwege erreichen. Dem steht jedoch ein erhöhter Aufwand bei der Dichtung und Dosierung gegenüber. Insbesondere lassen sich bei Reaktionsspritzgussverfahren bisher keine Trägersubstrate beschichten, die eine Öffnung aufweisen, da die Reaktionsmasse bzw. das weitere Kunststoffmaterial auf die Rückseite des Trägersubstrat fließt. Bringt man die Öffnung jedoch erst nach dem Aufbringen der Deckschicht auf das Trägersubstrat ein, müssen die hierbei freigelegten Flanken von Trägersubstrat und Deckschicht wieder versiegelt werden, um einen Medienzutritt (z.B. Wasser) in die Grenzfläche von Trägersubstrat und Deckschicht zu verhindern. Dies bedarf eines zusätzlichen Verfahrensschritts und ist entsprechend aufwendig.

Ein gattungsgemäßes Verfahren gibt zur Lösung des Problems einer verbesserten Abdichtung der Zusatzkavität gegenüber dem Reaktionsspritzgusswerkzeug und dem Trägersubstrat an eine zusätzliche Dichtung durch Anspritzen einer als "verlorene Dichtung" bezeichneten Rands an dem Trägersubstrat an. Die verlorene Dichtung wird nach Abschluss des Verfahrens wieder entfernt. Das zusätzliche Anspritzen einer Dichtung aus einem anderen Material ist vergleichsweise aufwendig und teuer. Auch die Notwendigkeit die Dichtung wieder zu entfernen, vergrößert die Anzahl der Verfahrensschritte und erhöht die Fertigungskosten weiter.

Aufgabe der vorliegenden Erfindung ist es ein alternatives Verfahren anzugeben, dass eine verbesserte Abdichtung mit einfacheren und kostengünstigeren Mitteln erreicht.

Diese Aufgabe wird vorliegend gelöst durch ein Verfahren zur Herstellung eines Außenverkleidungsteils für Fahrzeuge unter Verwendung eines Reaktionsspritzgussverfahrens in einem Reaktionsspritzgusswerkzeugs, umfassend die nachfolgenden Schritte:
- Bereitstellen eines zumindest abschnittsweise flächig ausgebildeten Trägersubstrats aus einem ersten Kunststoffmaterial, wobei das Trägersubstrat eine das Trägersubstrat durchsetzende Öffnung und eine erste Seite und eine der ersten Seite gegenüberliegende Rückseite aufweist,
- Positionieren des Trägersubstrats innerhalb einer durch zwei Werkzeugformhälften gebildeten Kavität des Reaktionsspritzgusswerkzeugs, wobei im geschlossenen Zustand des Reaktionsspritzgusswerkzeugs zwischen der ersten Seite des Trägersubstrat und einer der Werkzeugformhälften des Reaktionsspritzgusswerkzeugs eine Zusatzkavität innerhalb der Kavität frei bleibt,
- Einbringen eines weiteren Kunststoffmaterials in die Zusatzkavität, wobei das weitere Kunststoffmaterial nach seiner Erstarrung oder Verfestigung eine Deckschicht auf oder über der ersten Seite des Trägersubstrat ausbildet,
- Öffnen des Reaktionsspritzgusswerkzeugs und Entformen des gebildeten, das Trägersubstrat und die Deckschicht umfassenden, Außenverkleidungsteils,

wobei ein von der ersten Werkzeugformhälfte und/oder der weiteren Werkzeugformhälfte abstehendes und die Öffnung durchgreifendes Freihaltelement, dessen Außenabmessung kleiner ist als die Innenabmessung der Öffnung, vorgesehen ist,
wobei das Trägersubstrat auf der der Zusatzkavität abgewandten Rückseite, eine die Öffnung umschließende, einstückig angeformte, vorstehende Dichtkante aufweist und/oder, wobei die weitere Werkzeugformhälfte im Anlagebereich zu der Rückseite des Trägersubstrat, eine die Öffnung umschließenden, einstückig angeformte, vorstehende Dichtkante aufweist,
sodass beim Einbringen des weiteren Kunststoffmaterials in die Zusatzkavität, neben der Herstellung der Deckschicht, zusätzlich das Volumen zwischen der Flanke der Öffnung und dem Freihaltelement gefüllt und die Flanke mit dem weiteren Kunststoffmaterial versiegelt wird, wobei mittels der Dichtkante oder mittels der Dichtkanten ein ungewolltes Überspritzen der Rückseite des Trägersubstrats mit dem weiteren Kunststoffmaterial verhindert wird.

Es kann vorgesehen sein, dass das Bereitstellen des flächig ausgebildeten Trägersubstrats mittels eines Spritzgussverfahrens oder eines Plattenumformungsverfahrens erfolgt.

Es kann vorgesehen sein, dass die Öffnung bereits bei der Urformung des Trägersubstrats ausgebildet wird

Es kann vorgesehen sein, dass die Öffnung nach der Urformung des Trägersubstrats ausgebildet, insbesondere mittels spanender Bearbeitung oder mittels eines Stanzverfahrens oder mittels eines Schneidverfahrens ausgebildet wird.

Es kann vorgesehen sein, dass die Deckschicht in einem Reaction Injection Moulding-Verfahren (RIM) auf oder über der erste Seite des Trägersubstrat ausgebildet wird.

Es kann vorgesehen sein, dass Außenverkleidungsteil eine Wandstärke im Bereich von 0,8 mm bis 4,5 mm aufweist.

Es kann vorgesehen sein, dass auf der Deckschicht wenigstens eine Schutzbeschichtung, insbesondere eine Silanbeschichtung angeordnet wird.

Es kann vorgesehen sein, dass das erste Kunststoffmaterial ein transparentes oder transluzentes Kunststoffmaterial zur Ausbildung eines transparenten oder transluzenten Trägersubstrats ist.

Es kann hierbei vorgesehen sein, dass das transparente oder transluzente erste Kunststoffmaterial Polypropylen und/oder Polycarbonat und/oder Polyethylenterephthalat und/oder Acrylnitril-Butadien-Styrol und/oder Polymethylmethacrylat und/oder Polyamid und/oder Polyurethan umfasst.

Es kann vorgesehen sein, dass das weitere Kunststoffmaterial Polyurethan oder Polyurea umfasst.

Es kann vorgesehen sein, dass das Außenverkleidungsteil eine Stoßfängerverkleidung oder eine Kotflügelverkleidung oder eine Schwellerverkleidung oder ein Türaußenverkleidung oder ein Spoiler oder ein Frontpanel oder ein Bestandteil einer Stoßfängerverkleidung oder einer Kotflügelverkleidung oder einer Schwellerverkleidung oder einer Türaußenverkleidung oder eines Spoilers oder eines Frontpanel ist.

Ein Frontpanel ist derjenige Teil eines Fahrzeugs an dessen Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Im Folgenden wird die Erfindung anhand lediglich Ausführungsbeispiele darstellender Zeichnungen erläutert. Es zeigen schematisch:
- Fig. 1: eine Frontansicht eines Außenverkleidungsteils eines Fahrzeuges;
- Fig. 2: ein Querschnitt durch ein erfindungsgemäß hergestelltes Außenverkleidungsteil;
- Fig. 3 und 4: schematische Querschnitte durch zwei Varianten eines Reaktionsspritzgusswerkzeug.

In den Figuren werden gleiche oder funktionsgleiche Elemente mit den gleichen Bezugszeichen versehen.

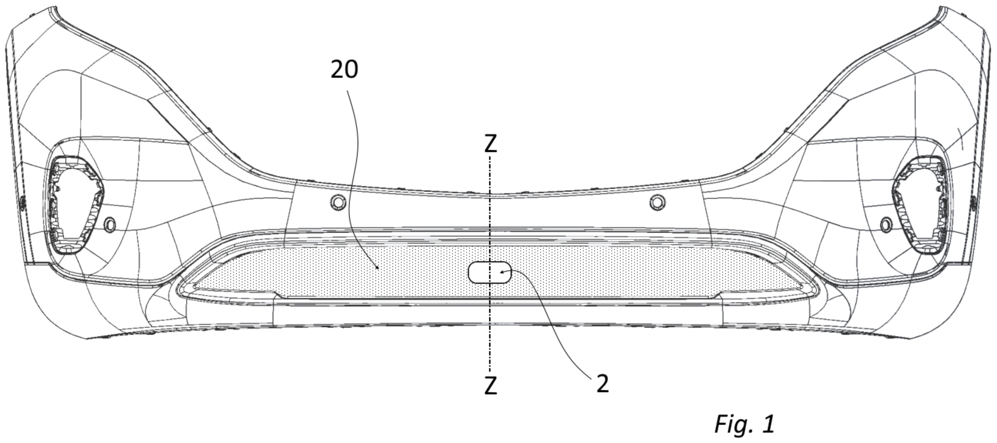

Die Fig. 1 zeigt eine Frontansicht eines mit dem erfindungsgemäßen Verfahren hergestellten Außenverkleidungsteils 20 für ein Fahrzeug. Das Außenverkleidungsteil 20 weist eine Öffnung 2 auf und ist als ein Frontpanel ausgebildet, das zudem Bestandteil einer Stoßfängerverkleidung ist.

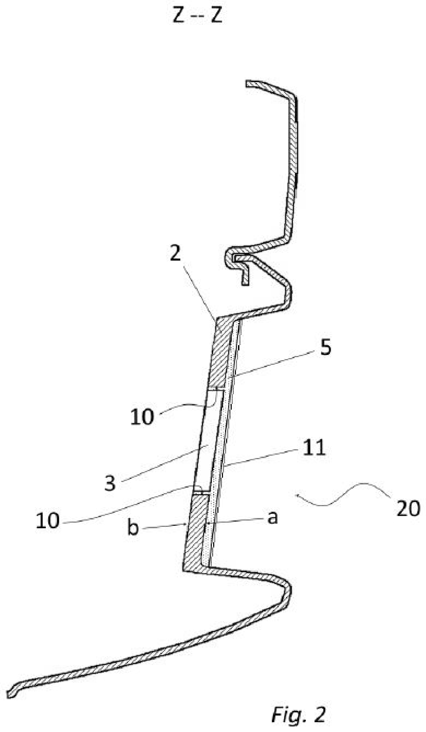

Die Fig. 2 zeigt ein Querschnitt durch das erfindungsgemäß hergestellte Außenverkleidungsteil entlang der Schnittlinie Z-Z aus Fig. 1.

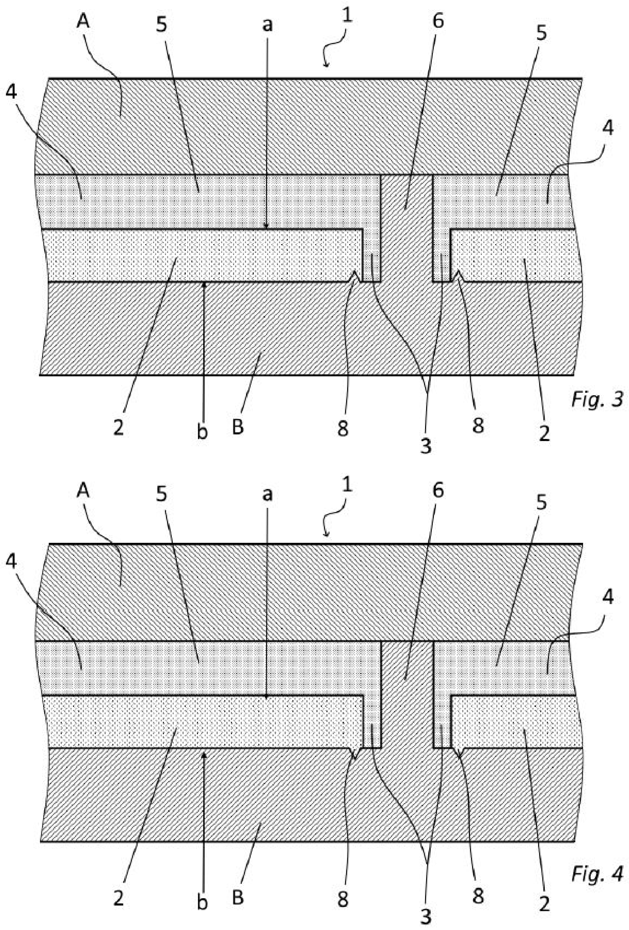

Das Verfahren zur Herstellung des in Fig. 1 und Fig. 2 gezeigten Außenverkleidungsteils 20 für Fahrzeuge unter Verwendung eines Reaktionsspritzgussverfahrens in einem Reaktionsspritzgusswerkzeugs 1, umfasst die nachfolgenden Schritte:
- Bereitstellen eines zumindest abschnittsweise flächig ausgebildeten Trägersubstrats 2 aus einem ersten Kunststoffmaterial, wobei das Trägersubstrat 2 eine das Trägersubstrat 2 durchsetzende Öffnung 3 und eine erste Seite a und eine der ersten Seite a gegenüberliegende Rückseite b aufweist (vgl. Fig. 3 oder Fig. 4),
- Positionieren des Trägersubstrats 2 innerhalb einer durch zwei Werkzeugformhälften A, B gebildeten Kavität des Reaktionsspritzgusswerkzeugs 1, wobei im geschlossenen Zustand des Reaktionsspritzgusswerkzeugs 1 zwischen der ersten Seite a des Trägersubstrat 2 und einer der Werkzeugformhälften A des Reaktionsspritzgusswerkzeugs 1 eine Zusatzkavität 4 innerhalb der Kavität frei bleibt (vgl. Fig. 3 oder Fig. 4),
- Einbringen eines weiteren Kunststoffmaterials in die Zusatzkavität 4, wobei das weitere Kunststoffmaterial nach seiner Erstarrung oder Verfestigung eine Deckschicht 5 auf oder über der ersten Seite a des Trägersubstrat 2 ausbildet (vgl. Fig. 3 oder Fig. 4),
- Öffnen des Reaktionsspritzgusswerkzeugs 1 und Entformen des gebildeten, das Trägersubstrat 2 und die Deckschicht 5 umfassenden, Außenverkleidungsteils 20 (vgl. Fig. 2),

wobei erfindungsgemäß ein von der ersten Werkzeugformhälfte A und/oder der weiteren Werkzeugformhälfte B abstehendes und die Öffnung durchgreifendes Freihaltelement 6, dessen Außenabmessung kleiner ist als die Innenabmessung der Öffnung 3, vorgesehen ist (vgl. Fig. 3 oder Fig. 4),
wobei das Trägersubstrat 2 auf der der Zusatzkavität 4 abgewandten Rückseite b, eine die Öffnung 3 umschließende, einstückig angeformte, vorstehende Dichtkante 7 aufweist und/oder, wobei die weitere Werkzeugformhälfte B im Anlagebereich zu der Rückseite b des Trägersubstrat 2, eine die Öffnung 3 umschließenden, einstückig angeformte, vorstehende Dichtkante 8 aufweist (vgl. Fig. 3 oder Fig. 4).

Beim Einbringen des weiteren Kunststoffmaterials in die Zusatzkavität 4 wird, neben der Herstellung der Deckschicht 5, zusätzlich das Volumen zwischen der Flanke 10 der Öffnung 3 und dem Freihaltelement 6 gefüllt und die Flanke 10 mit dem weiteren Kunststoffmaterial versiegelt, wobei mittels der Dichtkante 7, 8 oder mittels der Dichtkanten 7, 8 ein ungewolltes Überspritzen der Rückseite b des Trägersubstrats 2 mit dem weiteren Kunststoffmaterial verhindert wird (vgl. Fig. 3 oder Fig. 4).

Das Bereitstellen des flächig ausgebildeten Trägersubstrats 2 erfolgt mittels eines Spritzgussverfahrens oder eines Plattenumformungsverfahrens.

Die Öffnung 3 kann bereits bei der Urformung des Trägersubstrats 2 ausgebildet werden, kann alternativ nach der Urformung des Trägersubstrats 2 ausgebildet, insbesondere mittels spanender Bearbeitung oder mittels eines Stanzverfahrens oder mittels eines Schneidverfahrens ausgebildet werden.

Die Deckschicht 5 wird in diesem Ausführungsbeispiel in einem Reaction Injection Moulding-Verfahren (RIM) auf oder über der erste Seite a des Trägersubstrat 2 ausgebildet.

Auf der Deckschicht 5 wird wenigstens eine Schutzbeschichtung 11, insbesondere eine Silanbeschichtung angeordnet (vgl. Fig. 2).

Das erste Kunststoffmaterial ist ein transparentes oder transluzentes Kunststoffmaterial zur Ausbildung eines transparenten oder transluzenten Trägersubstrats 2 ist, insbesondere umfasst das transparente oder transluzente erste Kunststoffmaterial Polypropylen und/oder Polycarbonat und/oder Polyethylenterephthalat und/oder Acrylnitril-Butadien-Styrol und/oder Polymethylmethacrylat und/oder Polyamid und/oder Polyurethan.

Das weitere Kunststoffmaterial umfasst in diesem Ausführungsbeispiel Polyurethan oder Polyurea.

Das Außenverkleidungsteil ist vorliegend ein Frontpanel bzw. ein Bestandteil einer Stoßfängerverkleidung. Möglichkeiten für das Außenverkleidungsteil könnten zudem beispielsweise eine Kotflügelverkleidung oder eine Schwellerverkleidung oder ein Türaußenverkleidung oder ein Spoiler oder ein Frontpanel oder ein Bestandteil einer Kotflügelverkleidung oder einer Schwellerverkleidung oder einer Türaußenverkleidung oder eines Spoilers oder eines Frontpanel sein.

## Patentansprüche

1. Verfahren zur Herstellung eines Außenverkleidungsteils (20) für Fahrzeuge unter Verwendung eines Reaktionsspritzgussverfahrens in einem Reaktionsspritzgusswerkzeugs (1), umfassend die nachfolgenden Schritte:
- Bereitstellen eines zumindest abschnittsweise flächig ausgebildeten Trägersubstrats (2) aus einem ersten Kunststoffmaterial, wobei das Trägersubstrat (2) eine das Trägersubstrat (2) durchsetzende Öffnung (3) und eine erste Seite (a) und eine der ersten Seite (a) gegenüberliegende Rückseite (b) aufweist,
- Positionieren des Trägersubstrats (2) innerhalb einer durch zwei Werkzeugformhälften (A, B) gebildeten Kavität des Reaktionsspritzgusswerkzeugs (1), wobei im geschlossenen Zustand des Reaktionsspritzgusswerkzeugs (1) zwischen der ersten Seite (a) des Trägersubstrat (2) und einer der Werkzeugformhälften (A) des Reaktionsspritzgusswerkzeugs (1) eine Zusatzkavität (4) innerhalb der Kavität frei bleibt,
- Einbringen eines weiteren Kunststoffmaterials in die Zusatzkavität (4), wobei das weitere Kunststoffmaterial nach seiner Erstarrung oder Verfestigung eine Deckschicht (5) auf oder über der ersten Seite (a) des Trägersubstrat (2) ausbildet,
- Öffnen des Reaktionsspritzgusswerkzeugs (1) und Entformen des gebildeten, das Trägersubstrat (2) und die Deckschicht (5) umfassenden, Außenverkleidungsteils (20),
**dadurch gekennzeichnet, dass**
ein von der ersten Werkzeugformhälfte (A) und/oder der weiteren Werkzeugformhälfte (B) abstehendes und die Öffnung durchgreifendes Freihaltelement (6), dessen Außenabmessung kleiner ist als die Innenabmessung der Öffnung (3), vorgesehen ist,
wobei das Trägersubstrat (2) auf der der Zusatzkavität (4) abgewandten Rückseite (b), eine die Öffnung (3) umschließende, einstückig angeformte, vorstehende Dichtkante (7) aufweist und/oder, wobei die weitere Werkzeugformhälfte (B) im Anlagebereich zu der Rückseite (b) des Trägersubstrat (2), eine die Öffnung (3) umschließenden, einstückig angeformte, vorstehende Dichtkante (8) aufweist,
sodass beim Einbringen des weiteren Kunststoffmaterials in die Zusatzkavität (4), neben der Herstellung der Deckschicht (5), zusätzlich das Volumen zwischen der Flanke (10) der Öffnung (3) und dem Freihaltelement (6) gefüllt und die Flanke (10) mit dem weiteren Kunststoffmaterial versiegelt wird, wobei mittels der Dichtkante (7, 8) oder mittels der Dichtkanten (7, 8) ein ungewolltes Überspritzen der Rückseite (b) des Trägersubstrats (2) mit dem weiteren Kunststoffmaterial verhindert wird.

2. Verfahren nach Anspruch 1, **dadurch gekennzeichnet, dass** das Bereitstellen des flächig ausgebildeten Trägersubstrats (2) mittels eines Spritzgussverfahrens oder eines Plattenumformungsverfahrens erfolgt.

3. Verfahren nach einem der vorstehenden Ansprüche 1 oder 2, **dadurch gekennzeichnet, dass** die Öffnung (3) bereits bei der Urformung des Trägersubstrats (2) ausgebildet wird.

4. Verfahren nach einem der vorstehenden Ansprüche 1 oder 2, **dadurch gekennzeichnet, dass** die Öffnung (3) nach der Urformung des Trägersubstrats (2) ausgebildet, insbesondere mittels spanender Bearbeitung oder mittels eines Stanzverfahrens oder mittels eines Schneidverfahrens ausgebildet wird.

5. Verfahren nach einem der vorstehenden Ansprüche, **dadurch gekennzeichnet, dass** die Deckschicht (5) in einem Reaction Injection Moulding-Verfahren (RIM) auf oder über der erste Seite (a) des Trägersubstrat (2) ausgebildet wird.

6. Verfahren nach einem der vorstehenden Ansprüche, **dadurch gekennzeichnet, dass** auf der Deckschicht (5) wenigstens eine Schutzbeschichtung (11), insbesondere eine Silanbeschichtung angeordnet wird.

7. Verfahren nach einem der vorstehenden Ansprüche, **dadurch gekennzeichnet, dass** das erste Kunststoffmaterial ein transparentes oder transluzentes Kunststoffmaterial zur Ausbildung eines transparenten oder transluzenten Trägersubstrats (2) ist.

8. Verfahren nach Anspruch 7, **dadurch gekennzeichnet, dass** das transparente oder transluzente erste Kunststoffmaterial Polypropylen und/oder Polycarbonat und/oder Polyethylenterephthalat und/oder Acrylnitril-Butadien-Styrol und/oder Polymethylmethacrylat und/oder Polyamid und/oder Polyurethan umfasst.

9. Verfahren nach einem der vorstehenden Ansprüche, **dadurch gekennzeichnet, dass** das weitere Kunststoffmaterial Polyurethan oder Polyurea umfasst.

10. Verfahren nach einem der vorstehenden Ansprüche, **dadurch gekennzeichnet, dass** das Außenverkleidungsteil eine Stoßfängerverkleidung oder eine Kotflügelverkleidung oder eine Schwellerverkleidung oder ein Türaußenverkleidung oder ein Spoiler oder ein Frontpanel oder ein Bestandteil einer Stoßfängerverkleidung oder einer Kotflügelverkleidung oder einer Schwellerverkleidung oder einer Türaußenverkleidung oder eines Spoilers oder eines Frontpanel ist.
